# EUROPEAN PATENT SPECIFICATION

(11) **EP 4 506 321 B1**
(45) Date of publication and mention of the grant of the patent: **27.05.2026**
(21) Application number: 22934752.1
(22) Date of filing: 19.10.2022
(51) Int. Cl.: C04B 35/64, F27D 5/00, C04B 35/645, C04B 35/581, C04B 35/593

(54) **DYNAMIC SINTERING METHOD FOR NITRIDE CERAMIC SUBSTRATE**
DYNAMISCHES SINTERVERFAHREN FÜR EIN NITRIDKERAMIKSUBSTRAT
PROCÉDÉ DE FRITTAGE DYNAMIQUE POUR SUBSTRAT CÉRAMIQUE EN NITRURE

(30) Priority: 02.04.2022 CN 202210349584
(43) Date of publication of application: 12.02.2025
(73) Proprietor: Sinoma Advanced Nitride Ceramics Co., Ltd., Zibo, Shandong 255000 (CN)
(72) Inventor: SUN, Feng, Zibo, Shandong 255000 (CN); ZHANG, Jing, Zibo, Shandong 255000 (CN); ZHANG, Weiru, Zibo, Shandong 255000 (CN); DONG, Tingxia, Zibo, Shandong 255000 (CN); WANG, Zaiyi, Zibo, Shandong 255000 (CN); XU, Xuemin, Zibo, Shandong 255000 (CN); LV, Peiyuan, Zibo, Shandong 255000 (CN); XU, Jinmeng, Zibo, Shandong 255000 (CN); WANG, Naijian, Zibo, Shandong 255000 (CN); WANG, Mei, Zibo, Shandong 255000 (CN)
(74) Representative: Porta & Consulenti Associati S.p.A.
(86) International application number: PCT/CN2022/126055
(87) International publication number: WO 2023/184934

(56) References cited:
- EP-A1- 4 129 955
- WO-A1-2021/193762
- CN-A- 103 880 435
- CN-A- 113 916 002
- CN-U- 209 101 802
- JP-A- 2001 019 562
- JP-A- 2001 019 562
- JP-A- 2012 096 980
- JP-A- H09 165 266
- JP-A- S62 128 973

## Description

The present application claims priority to Chinese Patent Application No. 202210349584.8 filed to the China National Intellectual Property Administration (CNIPA) on April 02, 2022 and entitled "DYNAMIC SINTERING METHOD FOR NITRIDE CERAMIC SUBSTRATE'.

### TECHNICAL FIELD

The present disclosure relates to the technical field of ceramic materials, and in particular to a dynamic sintering method for a nitride ceramic substrate.

### BACKGROUND

Ceramic substrates serve as an important component of power semiconductor modules, playing the role of load bearing, heat dissipation, and insulation. Since being subjected to large thermal and mechanical stresses during operation, the ceramic substrates must have high thermal conductivity and excellent mechanical properties. Nitride ceramic substrates (aluminum nitride and silicon nitride) have become a preferred material for ceramic substrates of high-power devices due to their high thermal conductivity.

Nitrides such as silicon nitride and aluminum nitride are covalently-bonded compounds, which are difficult to sinter, and a certain amount of sintering aids must be added to achieve sintering densification. In addition, these nitrides show a high sintering shrinkage rate and are prone to deformation, thus greatly increasing the difficulty of preparing nitride substrates. In order to reduce the shrinkage deformation of nitride substrates during sintering, "press sintering" is generally adopted, that is, a flat plate of a certain weight is pressed on a top of the substrate to prevent deformation during the sintering. However, the pressing plate may also hinder the shrinkage of substrates to a certain extent, and even cause cracking of the substrates during sintering shrinkage. Therefore, it is necessary to further explore a sintering method suitable for nitride ceramic substrates.

JP 2001 019562 A describes the sintering of a flat ceramic body sandwiched between setter plates separated by pillar supports that shrink during sintering.

### SUMMARY

An object of the present invention is to provide a dynamic sintering method for a nitride ceramic substrate. The dynamic sintering method could realize a dynamic process from non-contact to contact between a pressing plate and a substrate during sintering, thereby avoiding deformation and cracking of the nitride ceramic substrate during the sintering.

To achieve the above object, the present invention provides the following technical solutions:

The present invention provides a dynamic sintering method for a nitride ceramic substrate, including the following steps:
arranging the nitride ceramic substrate between n support blocks with a same height in a non-contact manner, and placing a pressing plate above the n support blocks with the same height; where n is not less than 2; the pressing plate and the nitride ceramic substrate are arranged in parallel, and a spacing distance between the pressing plate and the nitride ceramic substrate is in a range of 0.01 mm to 1 mm; and a length of the pressing plate is greater than a length of the nitride ceramic substrate, and a width of the pressing plate is greater than a width of the nitride ceramic substrate; and
adjusting a composition of a sintering aid of the support blocks and/or a molding pressure of the support blocks, such that a shrinkage starting temperature of the support blocks is less than a shrinkage starting temperature of the nitride ceramic substrate, and a linear shrinkage rate of the support blocks in a height direction is greater than a linear shrinkage rate of the nitride ceramic substrate in a height direction,
   wherein the shrinkage starting temperature of the support blocks (3) is in a range of 1,300°C to 1,700°C; and the linear shrinkage rate of the support blocks (3) in the height direction is in a range of 16% to 24%, and
   wherein a difference between the shrinkage starting temperature of the support blocks (3) and the shrinkage starting temperature of the nitride ceramic substrate (4) is in a range of 30°C to 100°C; and a difference between the linear shrinkage rate of the support blocks (3) in the height direction and the linear shrinkage rate of the nitride ceramic substrate (4) in the height direction is in a range of 0.2% to 6%; and
subjecting a resulting system to sintering to obtain a sintered nitride ceramic substrate; where the sintering is conducted as follow: heating the resulting system to a temperature of 1,700° C to 2,000° C at a heating rate of 0.1 ° C/min to 10° C/min, and holding at the temperature for 1 h to 12 h,

wherein the shrinkage starting temperature is a temperature at which the linear shrinkage rate in the height direction is 5%,
the shrinkage starting temperature and the linear shrinkage rate in the height direction of the support blocks (3) are obtained from sintering shrinkage curves of the support blocks (3) and the nitride ceramic substrate (4), and
the sintering shrinkage curves of the support blocks (3) and the nitride ceramic substrate (4) are measured by a high-temperature thermal expansion instrument.

In some embodiments, the nitride ceramic substrate is selected from the group consisting of a silicon nitride substrate and an aluminum nitride substrate; and a molding process of the nitride ceramic substrate is selected from the group consisting of tape casting, dry pressing, gel casting, and dough rolling.

In some embodiments, the nitride ceramic substrate has a thickness of 0.2 mm to 2.0 mm, a length of not more than 300 mm, and a width of not more than 300 mm.

In some embodiments, the nitride ceramic substrate is in a number of not less than 1; under the condition that the nitride ceramic substrate is in a number of greater than 1, a plurality of nitride ceramic substrates are laminated in a lamination layer number of not more than 30, adjacent nitride ceramic substrates are separated by a boron nitride isolation powder layer; and boron nitride isolation powder layers in different layers independently have a thickness of 20 µm to 300 µm.

In some embodiments, the pressing plate is made from a material selected from the group consisting of boron nitride, silicon nitride, aluminum nitride, and graphite.

In some embodiments, a weight of the pressing plate is calculated as *W=P*×*S*/9.8-(*N-*1)×*W1,* where *P* represents a pressure of a bottom nitride ceramic substrate, and *P* is 30 Pa to 500 Pa; *S* represents an area of thrust surface of the nitride ceramic substrate, in m²; *N* represents a lamination layer number of the nitride ceramic substrate, and *N* is 1 to 30; and *W1* represents a weight of a single nitride ceramic substrate, in kg.

In some embodiments, a material of the support blocks is the same as a material of the nitride ceramic substrate; and a molding process of the support blocks is selected from the group consisting of dry pressing and cold isostatic pressing, an upper surface and a lower surface of each of the support blocks are parallel, and each of the support blocks has a cross-sectional area of not less than 30 mm².

The present invention provides a dynamic sintering method for a nitride ceramic substrate. In the present disclosure, depending on differences between support blocks and the nitride ceramic substrate in the shrinkage starting temperature and the shrinkage rate, the shrinkage starting temperature of the support blocks is controlled to be less that of the nitride ceramic substrate, and the linear shrinkage rate in the height direction of the support blocks is controlled to be greater than that of the nitride ceramic substrate, such that the dynamic sintering process from non-contact to contact between the pressing plate and the substrate during the sintering can be achieved, thereby avoiding cracking of the substrate during the sintering, and reducing deformation of the substrate during the sintering, making it possible to achieve a warping degree of the substrate of less than 1.0 µm/mm.

### BRIEF DESCRIPTION OF THE DRAWINGS

FIG. 1 shows a schematic diagram of a dynamic sintering method for the nitride ceramic substrate according to the invention, where 1 represents a boron nitride composite crucible, 2 represents a pressing plate, 3 represents a support block, 4 represents a nitride ceramic substrate, and 5 represents a boron nitride isolation powder layer;
FIG. 2 shows a schematic diagram of a dynamic sintering method for the nitride ceramic substrate according to an embodiment of the present disclosure, not claimed;
FIG. 3 shows curves of the support block and the substrate changing with temperature in Example 1; and
FIG. 4 shows curves of the support block and the substrate changing with temperature in comparative Example 1.

### DETAILED DESCRIPTION OF THE EMBODIMENTS

The present invention provides a dynamic sintering method for a nitride ceramic substrate, including the following steps:
arranging the nitride ceramic substrate between n support blocks with a same height in a non-contact manner, and placing a pressing plate above the n support blocks with the same height; where n is not less than 2; the pressing plate and the nitride ceramic substrate are arranged in parallel, and a spacing distance between the pressing plate and the nitride ceramic substrate is in a range of 0.01 mm to 1 mm; and a length of the pressing plate is greater than a length of the nitride ceramic substrate, and a width of the pressing plate is greater than a width of the nitride ceramic substrate; and
adjusting a composition of a sintering aid of the support blocks and/or a molding pressure of the support blocks, such that a shrinkage starting temperature of the support blocks is less than a shrinkage starting temperature of the nitride ceramic substrate, and a linear shrinkage rate of the support blocks in a height direction is greater than a linear shrinkage rate of the nitride ceramic substrate in a height direction,
   wherein the shrinkage starting temperature of the support blocks (3) is in a range of 1,300°C to 1,700°C; and the linear shrinkage rate of the support blocks (3) in the height direction is in a range of 16% to 24%, and
   wherein a difference between the shrinkage starting temperature of the support blocks (3) and the shrinkage starting temperature of the nitride ceramic substrate (4) is in a range of 30°C to 100°C; and a difference between the linear shrinkage rate of the support blocks (3) in the height direction and the linear shrinkage rate of the nitride ceramic substrate (4) in the height direction is in a range of 0.2% to 6%; and
subjecting a resulting system to sintering to obtain a sintered nitride ceramic substrate; where the sintering is conducted as follow: heating the resulting system to a temperature of 1,700° C to 2,000° C at a heating rate of 0.1° C/min to 10° C/min, and holding at the temperature for 1 h to 12 h,
wherein the shrinkage starting temperature is a temperature at which the linear shrinkage rate in the height direction is 5%,
the shrinkage starting temperature and the linear shrinkage rate in the height direction of the support blocks (3) are obtained from sintering shrinkage curves of the support blocks (3) and the nitride ceramic substrate (4), and
the sintering shrinkage curves of the support blocks (3) and the nitride ceramic substrate (4) are measured by a high-temperature thermal expansion instrument.

In the present disclosure, unless otherwise specified, all materials or reagents used are commercially available products well known to those skilled in the art.

In the present invention, the nitride ceramic substrate is arranged between n support blocks with a same height in a non-contact manner; where n is not less than 2. In the present disclosure, in some embodiments, the nitride ceramic substrate is selected from the group consisting of a silicon nitride substrate and an aluminum nitride substrate. In some embodiments, a molding process of the nitride ceramic substrate is selected from the group consisting of tape casting, dry pressing, gel casting, and dough rolling. There is no particular limitation on a specific preparation process of the nitride ceramic substrate, and any process well known to those skilled in the art may be used.

In the present invention, in some embodiments, the nitride ceramic substrate has a thickness of 0.2 mm to 2.0 mm, and preferably 0.5 mm to 1.5 mm. In the present disclosure, in some embodiments, the nitride ceramic substrate has a length of not more than 300 mm, and preferably 150 mm. In the present disclosure, in some embodiments, the nitride ceramic substrate has a width of not more than 300 mm, and preferably 150 mm.

In the present invention, the nitride ceramic substrate is in a number of not less than 1. In some embodiments, under the condition that the nitride ceramic substrate is in a number of greater than 1, a plurality of nitride ceramic substrates are laminated in a lamination layer number of not more than 30, and preferably 5 to 20. In some embodiments, adjacent nitride ceramic substrates are separated by a boron nitride isolation powder layer. In some embodiments, boron nitride isolation powder layers in different layers independently have a thickness of 20 µm to 300 µm, and preferably 50 µm to 200 µm.

In the present invention, the nitride ceramic substrate is arranged between n support blocks with a same height in a non-contact manner. In some embodiments, a material of the support blocks is the same as a material of the nitride ceramic substrate. In some embodiments, a molding process of the support blocks is dry pressing and/or cold isostatic pressing, an upper surface and a lower surface of each of the support blocks are parallel, and each of the support blocks has a cross-sectional area of not less than 30 mm². There is no special limitation on shape and preparation process of the support blocks, any process known in the art may be used and adjusted according to actual demands. In the examples, each of the support blocks has a size of 10 mm × 10 mm × 5.2 mm or 10 mm × 10 mm × 7.8 mm, and a composition of a sintering aid of the support blocks is 5% yttrium oxide (by mass percentage relative to a total mass of the silicon nitride support blocks) and 5% aluminum oxide (by mass percentage relative to a total mass of the silicon nitride support blocks); and in some embodiments, the molding is conducted at a pressure of 50 MPa. Alternatively, the support blocks are made of aluminum nitride and each have a size of 20 mm×20 mm×1.52 mm, and a composition of a sintering aid of the support blocks is 10% neodymium oxide (by mass percentage relative to a total mass of the aluminum nitride support blocks); and in some embodiments, the molding is conducted at a pressure of 20 MPa.

In the present invention, embodiments, the shrinkage starting temperature of the support blocks is in a range of 1,450° C to 1,600° C.

In the present invention, a pressing plate is placed above the n support blocks of the same height. In the present disclosure, in some embodiments, the pressing plate and the nitride ceramic substrate are arranged in parallel, and a spacing distance between the pressing plate and the nitride ceramic substrate is in a range of 0.01 mm to 1 mm, and preferably 0.02 mm to 0.03 mm. In some embodiments, a length of the pressing plate is greater than a length of the nitride ceramic substrate, and a width of the pressing plate is greater than a width of the nitride ceramic substrate. In some embodiments, a difference between the length of the pressing plate and the length of the nitride ceramic substrate is not less than 10 mm. In some embodiments, a difference between the width of the pressing plate and the width of the nitride ceramic substrate is not less than 10 mm.

In the present disclosure, in some embodiments, the pressing plate is made from a material selected from the group consisting of boron nitride, silicon nitride, aluminum nitride, and graphite.

In the present disclosure, a weight of the pressing plate is calculated as *W=P*×*S*/9.8-(*N-*1)×*W1,* where *P* represents a pressure of a bottom nitride ceramic substrate, and *P* is 30 Pa to 500 Pa; *S* represents an area of thrust surface of the nitride ceramic substrate, in m²; *N* represents the lamination layer number of the nitride ceramic substrate, and *N* is 1 to 30; and *W1* represents a weight of a single nitride ceramic substrate, in kg.

In the present invention, a composition of a sintering aid and/or a molding pressure of the support blocks are adjusted, such that a shrinkage starting temperature of the support blocks is less than a shrinkage starting temperature of the nitride ceramic substrate, and a linear shrinkage rate of the support blocks in a height direction is greater than a linear shrinkage rate of the nitride ceramic substrate in a height direction. In some embodiments, the sintering is conducted to obtain a sintered nitride ceramic substrate; where the sintering is conducted as follow: heating the resulting system to a temperature of 1,850° C to 1,900° C at a heating rate 1° C/min to 5° C/min, and holding at the temperature for 3 h to 6 h.

In the present invention, in some embodiments, a difference between the shrinkage starting temperature of the support blocks and the shrinkage starting temperature of the nitride ceramic substrate is in a range of 50° C to 80° C. In some embodiments, a difference between the linear shrinkage rate of the support blocks in the height direction and the linear shrinkage rate of the nitride ceramic substrate in the height direction is in a range of 2.1% to 3.3%.

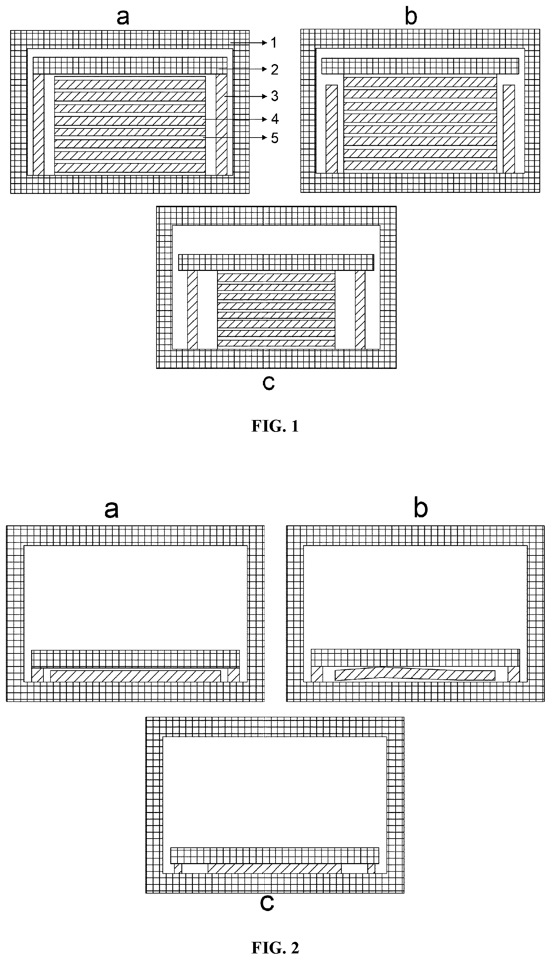

As one embodiment of the present invention shown in FIG. 1, in an early stage of sintering, the pressing plate and the nitride ceramic substrate are non-contacting. In a middle stage of sintering, since the shrinkage starting temperature of the support blocks is less than that of the nitride ceramic substrate, the shrinkage starting time is earlier than that of the nitride ceramic substrate, and the weight of the pressing plate gradually falls on the nitride ceramic substrate (panel b in FIG. 1), preventing the nitride ceramic substrate from being deformed due to drastic shrinkage. At this time, the number of pores is reduced, and a strength of the substrate is greatly improved compared to that when the debinding is just completed, and the substrate would not crack due to the weight of the bearing pressing plate.

As the other embodiment of the present disclosure, not claimed, shown in FIG. 2, in an early stage of sintering, the pressing plate and the nitride ceramic substrate are non-contacting. In a middle stage of sintering, since the shrinkage starting temperature of the support blocks is greater than that of the nitride ceramic substrate, the shrinkage starting time is later than that of the nitride ceramic substrate, and the nitride ceramic substrate begins to shrink, and then touches the pressing plate when deforming (panel b in FIG. 2). At this time, the deformation is restricted, but the shrinkage of substrate is basically not affected. Since the linear shrinkage rate of the support block in the height direction is greater than that of the nitride ceramic substrate, the weight of the pressing plate gradually falls on the substrate (panel c in FIG. 2), playing a role in high-temperature smoothing. There is no special definition for concepts of the early stage of sintering and the middle stage of sintering, which may be understood according to the definitions well known in the art.

### Example 1

Arranged as shown in FIG. 1: a size of the silicon nitride substrate was 150 mm × 150 mm × 0.5 mm, and a weight of a single silicon nitride substrate was 0.023 kg. A composition of a sintering aid of the silicon nitride substrates was 5% erbium oxide (by mass percentage relative to a total mass of the silicon nitride substrates) and 3% magnesium oxide (by mass percentage relative to the total mass of the silicon nitride substrates), and a molding process was tape casting. Nitride ceramic substrates were laminated in a lamination layer number of 10. Each boron nitride isolation powder layer has a thickness of 50 µm. The pressing plate was made of boron nitride with a weight of 250 g. A spacing distance between the pressing plate and the nitride ceramic substrate was 0.02 mm. A length and a width of the pressing plate were both 20 mm larger than those of the substrate. A pressure on a bottom silicon nitride substrate was 200 Pa. The support block was made of silicon nitride, with a size of 10 mm × 10 mm × 5.2 mm. A composition of a sintering aid of the support blocks was 5% yttrium oxide (by mass percentage relative to a total mass of the silicon nitride support blocks) and 5% aluminum oxide (by mass percentage relative to the total mass of the silicon nitride support blocks), a molding process was dry pressing, and the molding was conducted at a pressure of 50 MPa.

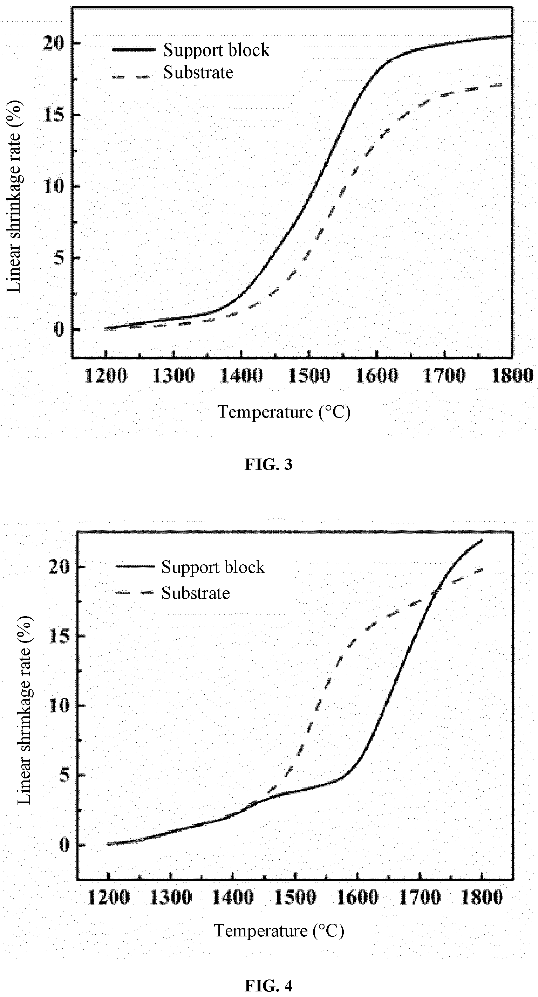

The silicon nitride substrate was sintered by heating to a temperature of 1,900° C at a heating rate of 0.1° C/min to 10° C/min, and then holding at the above temperature for 6 h to obtain a sintered silicon nitride substrate.
1) A warping degree of the sintered silicon nitride substrate was measured as follows: the sintered silicon nitride substrate was placed horizontally, an entire surface of the sintered silicon nitride substrate was scanned with a three-dimensional laser measuring instrument, and a difference between the highest point and the lowest point on the surface was taken as a warping amount (µm) of the substrate. A result of dividing the warping amount (µm) by the length of a diagonal line (mm) was the warping degree, and the warping degree of the sintered silicon nitride substrate in Example 1 was 0.5 µm/mm.
2) A temperature at which the linear shrinkage rate was 5% was specified as the shrinkage starting temperature. The sintering linear shrinkage curves of the support block and the substrate were measured by a high-temperature thermal expansion instrument, and the results are shown in FIG. 3. As shown in FIG. 3, the silicon nitride substrate has a shrinkage starting temperature of 1,500° C and a linear shrinkage rate of 17.2% in the height direction; and the support block has a shrinkage starting temperature of 1,450° C and a linear shrinkage rate of 20.5% in the height direction. The support block has a lower shrinkage starting temperature than that of the substrate, and a higher linear shrinkage rate in the height direction than that of the substrate, thereby realizing a dynamic process from non-contact to contact during the sintering.

### Example 2

Arranged as shown in FIG. 1: a size of the silicon nitride substrate was 180 mm × 180 mm × 0.5 mm, and a weight of a single silicon nitride substrate was 0.033 kg. A composition of a sintering aid of the silicon nitride substrates was 5% erbium oxide (by mass percentage relative to a total mass of the silicon nitride substrates) and 3% magnesium oxide (by mass percentage relative to the total mass of the silicon nitride substrates), and a molding process was tape casting. Nitride ceramic substrates were laminated in a lamination layer number of 15, Each boron nitride isolation powder layer has a thickness of 100 µm. The pressing plate was made of boron nitride with a weight of 530 g. A spacing distance between the pressing plate and the nitride ceramic substrate was 0.01 mm. A length and a width of the pressing plate were both 20 mm larger than those of the substrate. A pressure on a bottom silicon nitride substrate was 300 Pa. The support block was made of silicon nitride, with a size of 10 mm × 10 mm × 7.8 mm. A composition of a sintering aid of the support blocks was 5% yttrium oxide (by mass percentage relative to a total mass of the silicon nitride support blocks) and 5% aluminum oxide (by mass percentage relative to the total mass of the silicon nitride support blocks), a molding process was dry pressing, and the molding was conducted at a pressure of 50 MPa.

The silicon nitride substrate was sintered by heating to a temperature of 1,900° C at a heating rate of 0.1° C/min to 10° C/min, and then holding at the above temperature for 6 h to obtain a sintered silicon nitride substrate.
1) A warping degree of the sintered silicon nitride substrate was measured according to the method of Example 1. The warping degree of the sintered silicon nitride substrate was 0.6 µm/mm.
2) A temperature at which the linear shrinkage rate was 5% was specified as the shrinkage starting temperature. The sintering linear shrinkage curves of the support block and the substrate were measured by a high-temperature thermal expansion instrument, and the results are shown in FIG. 3. The silicon nitride substrate has a shrinkage starting temperature of 1,500° C and a linear shrinkage rate of 17.2% in the height direction; and the support block has a shrinkage starting temperature of 1,450° C and a linear shrinkage rate of 20.5% in the height direction. The support block has a lower shrinkage starting temperature than that of the substrate, and a higher linear shrinkage rate in the height direction than that of the substrate, thereby realizing a dynamic process from non-contact to contact during the sintering.

### Comparative Example 1

Arranged as shown in FIG. 2: a size of the aluminium nitride substrate was 300 mm × 300 mm × 1.5 mm, and a weight of a single aluminium nitride substrate was 145 kg. Aluminium nitride substrates were laminated in a lamination layer number of 1. A composition of a sintering aid of the aluminum nitride substrates was 5% yttrium oxide (by mass percentage relative to a total mass of the aluminum nitride substrates), and a molding process was tape casting. The pressing plate was made of boron nitride with a weight of 800 g. A spacing distance between the pressing plate and the nitride ceramic substrate was 0.03 mm. A length and a width of the pressing plate both were 40 mm greater than those of the substrate. The support block was made of aluminum nitride with a size of 20 mm × 20 mm × 1.52 mm. A composition of a sintering aid of the support blocks was 10% neodymium oxide (by mass percentage relative to a total mass of the aluminum nitride support blocks), and a molding process was dry pressing, and the molding was conducted at a pressure of 20 MPa.

The aluminum nitride substrate was sintered by heating to a temperature of 1,850° C at a heating rate of 0.1° C/min to 10° C/min, and then holding at the above temperature for 3 h to obtain a sintered aluminum nitride substrate.
1) A warping degree of the sintered silicon nitride substrate was measured according to the method of Example 1. The warping degree of the sintered silicon nitride substrate was 0.8 µm/mm.
2) A temperature at which the linear shrinkage rate was 5% was specified as the shrinkage starting temperature. The sintering linear shrinkage curves of the support block and the substrate were measured by a high-temperature thermal expansion instrument, and the results are shown in FIG. 4. As shown in FIG. 4, aluminum nitride substrate has a shrinkage starting temperature of 1,500° C and a linear shrinkage rate of 19.8% in the height direction; and the support block has a shrinkage starting temperature of 1,600° C and a linear shrinkage rate of 21.9% in the height direction. The support block has a greater shrinkage starting temperature than that of the substrate, and a higher linear shrinkage rate in the height direction than that of the substrate, thereby realizing a dynamic process of the pressing plate and substrate from non-contact to contact during the sintering.

## Claims

1. A dynamic sintering method for a nitride ceramic substrate, comprising the following steps:
arranging the nitride ceramic substrate between n support blocks (3) with a same height in a non-contact manner, and placing a pressing plate (2) above the n support blocks (3) with the same height; wherein n is not less than 2; the pressing plate (2) and the nitride ceramic substrate (4) are arranged in parallel, and a spacing distance between the pressing plate (2) and the nitride ceramic substrate (4) is in a range of 0.01 mm to 1 mm; and a length of the pressing plate (2) is greater than a length of the nitride ceramic substrate (4), and a width of the pressing plate (2) is greater than a width of the nitride ceramic substrate (4); and
adjusting a composition of a sintering aid of the support blocks (3) and/or a molding pressure of the support blocks (3), such that a shrinkage starting temperature of the support blocks (3) is less than a shrinkage starting temperature of the nitride ceramic substrate (4), and a linear shrinkage rate of the support blocks (3) in a height direction is greater than a linear shrinkage rate of the nitride ceramic substrate (4) in a height direction,
wherein the shrinkage starting temperature of the support blocks (3) is in a range of 1,300° C to 1,700° C; and the linear shrinkage rate of the support blocks (3) in the height direction is in a range of 16% to 24%, and
wherein a difference between the shrinkage starting temperature of the support blocks (3) and the shrinkage starting temperature of the nitride ceramic substrate (4) is in a range of 30° C to 100° C; and a difference between the linear shrinkage rate of the support blocks (3) in the height direction and the linear shrinkage rate of the nitride ceramic substrate (4) in the height direction is in a range of 0.2% to 6%; and
subjecting a resulting system to sintering to obtain a sintered nitride ceramic substrate; wherein the sintering is conducted as follow: heating the resulting system to a temperature of 1,700 ° C to 2,000 ° C at a heating rate of 0.1 ° C/min to 10° C/min, and holding at the temperature for 1 h to 12 h,
wherein the shrinkage starting temperature is a temperature at which the linear shrinkage rate in the height direction is 5%,
the shrinkage starting temperature and the linear shrinkage rate in the height direction of the support blocks (3) are obtained from sintering shrinkage curves of the support blocks (3) and the nitride ceramic substrate (4), and
the sintering shrinkage curves of the support blocks (3) and the nitride ceramic substrate (4) are measured by a high-temperature thermal expansion instrument.

2. The dynamic sintering method of claim 1, wherein the nitride ceramic substrate (4) is selected from the group consisting of a silicon nitride substrate and an aluminum nitride substrate; and a molding process of the nitride ceramic substrate (4) is selected from the group consisting of tape casting, dry pressing, gel casting, and dough rolling.

3. The dynamic sintering method of claim 1 or 2, wherein the nitride ceramic substrate (4) has a thickness of 0.2 mm to 2.0 mm, a length of not more than 300 mm, and a width of not more than 300 mm.

4. The dynamic sintering method of claim 3, wherein the nitride ceramic substrate (4) has a thickness of 0.5 mm to 1.5 mm, a length of 150 mm, and a width of 150 mm.

5. The dynamic sintering method of claim 3, wherein the nitride ceramic substrate (4) is in a number of not less than 1; and
under the condition that the nitride ceramic substrate (4) is in a number of greater than 1, a plurality of nitride ceramic substrates (4) are laminated in a lamination layer number of not more than 30; adjacent nitride ceramic substrates (4) are separated by a boron nitride isolation powder layer; and boron nitride isolation powder layers in different layers independently have a thickness of 20 µm to 300 µm.

6. The dynamic sintering method of claim 5, wherein under the condition of the nitride ceramic substrate (4) is in a number of greater than 1, the plurality of the nitride ceramic substrates (4) are laminated in the lamination layer number of 5 to 20, and the boron nitride isolation powder layers in different layers independently have a thickness of 50 µm to 200 µm.

7. The dynamic sintering method of claim 5 or 6, wherein a weight of the pressing plate is calculated as *W=P*×*S*/9.8-(*N*-1)×*W1,* wherein *P* represents a pressure of a bottom nitride ceramic substrate (4), and *P* is 30 Pa to 500 Pa; S represents an area of thrust surface of the nitride ceramic substrate (4), in m²; N represents a lamination layer number of the nitride ceramic substrate (4), and *N* is 1 to 30; and *W1* represents a weight of a single nitride ceramic substrate (4), in kg.

8. The dynamic sintering method of claim 1 or 7, wherein the spacing distance between the pressing plate (2) and the nitride ceramic substrate (4) is in a range of 0.02 mm to 0.03 mm.

9. The dynamic sintering method of claim 1 or 7, wherein a difference between the length of the pressing plate (2) and the length of the nitride ceramic substrate (4) is not less than 10 mm; and a difference between the width of the pressing plate (2) and the width of the nitride ceramic substrate (4) is not less than 10 mm.

10. The dynamic sintering method of claim 1, wherein a material of the support blocks (3) is the same as a material of the nitride ceramic substrate (4); and a molding process of the support blocks (3) is selected from the group consisting of dry pressing and cold isostatic pressing, an upper surface and a lower surface of each of the support blocks (3) are parallel, and each of the support blocks (3) has a cross-sectional area of not less than 30 mm².

11. The dynamic sintering method of claim 1, wherein the shrinkage starting temperature of the support blocks (3) is in a range of 1,450° C to 1,600° C.

12. The dynamic sintering method of claim 1 or 11, wherein a difference between the shrinkage starting temperature of the support blocks (3) and the shrinkage starting temperature of the nitride ceramic substrate (4) is in a range of 50° C to 80° C.

13. The dynamic sintering method of claim 1 or 11, wherein the sintering is conducted at a heating rate of 1° C/min to 5° C/min; the sintering is conducted at a temperature of 1,850° C to 1,900° C; and the holding at the temperature is conducted for 3 h to 6 h.

## Patentansprüche

1. Dynamisches Sinterverfahren für ein Nitridkeramiksubstrat, umfassend die folgenden Schritte:
Anordnen des Nitridkeramiksubstrats zwischen n Stützblöcken (3) mit derselben Höhe in einer berührungsfreien Weise und Platzieren einer Pressplatte (2) über den Stützblöcken (3) mit derselben Höhe, wobei n nicht kleiner als 2 ist, wobei die Pressplatte (2) und das Nitridkeramiksubstrat (4) parallel angeordnet sind und ein Beabstandungsabstand zwischen der Pressplatte (2) und dem Nitridkeramiksubstrat (4) in einem Bereich von 0,01 mm bis 1 mm liegt und eine Länge der Pressplatte (2) größer ist als eine Länge des Nitridkeramiksubstrats (4) und eine Breite der Pressplatte (2) größer ist als eine Breite des Nitridkeramiksubstrats (4), und
Abstimmen einer Zusammensetzung eines Sinterhilfsmittels der Stützblöcke (3) und/oder eines Formungsdrucks der Stützblöcke (3), sodass eine Schrumpfungsstarttemperatur der Stützblöcke (3) geringer ist als eine Schrumpfungsstarttemperatur des Nitridkeramiksubstrats (4) und eine lineare Schrumpfungsrate der Stützblöcke (3) in einer Höhenrichtung größer ist als eine lineare Schrumpfungsrate des Nitridkeramiksubstrats (4) in einer Höhenrichtung,
wobei die Schrumpfungsstarttemperatur der Stützblöcke (3) in einem Bereich von 1.300 °C bis 1.700 °C liegt und die lineare Schrumpfungsrate der Stützblöcke (3) in der Höhenrichtung in einem Bereich von 16 % bis 24 % liegt, und
wobei eine Differenz zwischen der Schrumpfungsstarttemperatur der Stützblöcke (3) und der Schrumpfungsstarttemperatur des Nitridkeramiksubstrats (4) in einem Bereich von 30 °C bis 100 °C liegt und eine Differenz zwischen der linearen Schrumpfungsrate der Stützblöcke (3) in der Höhenrichtung und der linearen Schrumpfungsrate des Nitridkeramiksubstrats (4) in der Höhenrichtung in einem Bereich von 0,2 % bis 6 % liegt, und
Unterziehen eines resultierenden Systems einer Sinterung, um ein gesintertes Nitridkeramiksubstrat zu erhalten, wobei die Sinterung wie folgt durchgeführt wird: Erhitzen des resultierenden Systems auf eine Temperatur von 1.700 °C bis 2.000 °C bei einer Aufheizrate von 0,1 °C/min bis 10 °C/min und Halten bei der Temperatur für 1 h bis 12 h,
wobei die Schrumpfungsstarttemperatur eine Temperatur ist, bei der die lineare Schrumpfungsrate in Höhenrichtung 5 % beträgt,
wobei die Schrumpfungsstarttemperatur und die lineare Schrumpfungsrate in Höhenrichtung der Stützblöcke (3) aus Sinterschrumpfungskurven der Stützblöcke (3) und des Nitridkeramiksubstrats (4) erhalten werden und
die Sinterschrumpfungskurven der Stützblöcke (3) und des Nitridkeramiksubstrats (4) mit einem Hochtemperatur-Wärmeausdehnungsinstrument gemessen werden.

2. Dynamisches Sinterverfahren nach Anspruch 1, wobei das Nitridkeramiksubstrat (4) aus der Gruppe bestehend aus einem Siliziumnitridsubstrat und einem Aluminiumnitridsubstrat ausgewählt ist und ein Formgebungsverfahren des Nitridkeramiksubstrats (4) aus der Gruppe bestehend aus Bandgießen, Trockenpressen, Gelgießen und Walzformen ausgewählt ist.

3. Dynamisches Sinterverfahren nach Anspruch 1 oder 2, wobei das Nitridkeramiksubstrat (4) eine Dicke von 0,2 mm bis 2,0 mm, eine Länge von nicht mehr als 300 mm und eine Breite von nicht mehr als 300 mm aufweist.

4. Dynamisches Sinterverfahren nach Anspruch 3, wobei das Nitridkeramiksubstrat (4) eine Dicke von 0,5 mm bis 1,5 mm, eine Länge von 150 mm und eine Breite von 150 mm aufweist.

5. Dynamisches Sinterverfahren nach Anspruch 3, wobei das Nitridkeramiksubstrat (4) in einer Anzahl von nicht weniger als 1 vorgesehen ist und eine Vielzahl von Nitridkeramiksubstraten (4) unter der Bedingung, dass das Nitridkeramiksubstrat (4) in einer Anzahl von größer als 1 vorgesehen ist, in einer Laminierungsschichtanzahl von nicht mehr als 30 laminiert werden, wobei benachbarte Nitridkeramiksubstrate (4) durch eine Bornitrid-Isolationspulverschicht getrennt sind und Bornitrid-Isolationspulverschichten in verschiedenen Schichten unabhängig voneinander eine Dicke von 20 µm bis 300 µm aufweisen.

6. Dynamisches Sinterverfahren nach Anspruch 5, wobei die Vielzahl der Nitridkeramiksubstrate (4) unter der Bedingung, dass das Nitridkeramiksubstrat (4) in einer Anzahl von größer als 1 vorgesehen ist, in einer Laminierungsschichtanzahl von 5 bis 20 laminiert werden und die Bornitrid-Isolationspulverschichten in verschiedenen Schichten unabhängig voneinander eine Dicke von 50 µm bis 200 µm aufweisen.

7. Dynamisches Sinterverfahren nach Anspruch 5 oder 6, wobei ein Gewicht der Pressplatte als *W=P*×*S*/*9*,8*-(N-1)*×*W1* berechnet wird, wobei P einen Druck eines unterseitigen Nitridkeramiksubstrats (4) darstellt und P 30 Pa bis 500 Pa beträgt, S eine Fläche der Druckoberfläche des Nitridkeramiksubstrats (4) in m² darstellt, N eine Laminierungsschichtanzahl des Nitridkeramiksubstrats (4) darstellt und N 1 bis 30 beträgt und *W1* ein Gewicht eines einzelnen Nitridkeramiksubstrats (4) in kg darstellt.

8. Dynamisches Sinterverfahren nach Anspruch 1 oder 7, wobei die Beabstandung zwischen der Pressplatte (2) und dem Nitridkeramiksubstrat (4) in einem Bereich von 0,02 mm bis 0,03 mm liegt.

9. Dynamisches Sinterverfahren nach Anspruch 1 oder 7, wobei eine Differenz zwischen der Länge der Pressplatte (2) und der Länge des Nitridkeramiksubstrats (4) nicht weniger als 10 mm beträgt und eine Differenz zwischen der Breite der Pressplatte (2) und der Breite des Nitridkeramiksubstrats (4) nicht weniger als 10 mm beträgt.

10. Dynamisches Sinterverfahren nach Anspruch 1, wobei ein Material der Stützblöcke (3) dasselbe ist wie ein Material des Nitridkeramiksubstrats (4) und ein Formgebungsverfahren der Stützblöcke (3) aus der Gruppe bestehend aus Trockenpressen und isostatischem Kaltpressen ausgewählt ist, eine obere Oberfläche und eine untere Oberfläche eines jeden der Stützblöcke (3) parallel sind und jeder der Stützblöcke (3) eine Querschnittsfläche von nicht weniger als 30 mm² aufweist.

11. Dynamisches Sinterverfahren nach Anspruch 1, wobei die Schrumpfungsstarttemperatur der Stützblöcke (3) in einem Bereich von 1450 °C bis 1600 °C liegt.

12. Dynamisches Sinterverfahren nach Anspruch 1 oder 11, wobei eine Differenz zwischen der Schrumpfungsstarttemperatur der Stützblöcke (3) und der Schrumpfungsstarttemperatur des Nitridkeramiksubstrats (4) in einem Bereich von 50 °C bis 80 °C liegt.

13. Dynamisches Sinterverfahren nach Anspruch 1 oder 11, wobei das Sintern bei einer Aufheizrate von 1 °C/min bis 5 °C/min durchgeführt wird, das Sintern bei einer Temperatur von 1.850 °C bis 1.900 °C durchgeführt wird und das Halten bei der Temperatur für 3 h bis 6 h durchgeführt wird.

## Revendications

1. Procédé de frittage dynamique pour un substrat en céramique de nitrure, comprenant les étapes suivantes :
disposer le substrat en céramique de nitrure entre n blocs de support (3) de même hauteur sans contact, et placer une plaque de pressage (2) au-dessus de ces blocs de support (3) de même hauteur ; dans lequel n n'est pas inférieur à 2 ; la plaque de pressage (2) et le substrat en céramique de nitrure (4) sont disposés parallèlement, et une distance d'espacement entre la plaque de pressage (2) et le substrat en céramique de nitrure (4) se situe dans une plage allant de 0,01 mm à 1 mm ; et une longueur de la plaque de pressage (2) est supérieure à une longueur du substrat en céramique de nitrure (4), et une largeur de la plaque de pressage (2) est supérieure à une largeur du substrat en céramique de nitrure (4) ; et
ajuster la composition d'un adjuvant de frittage des blocs de support (3) et/ou une pression de moulage des blocs de support (3), de sorte qu'une température de départ de retrait des blocs de support (3) soit inférieure à une température de départ de retrait du substrat en céramique de nitrure (4), et qu'un taux de retrait linéaire des blocs de support (3) dans le sens de la hauteur soit supérieur à un taux de retrait linéaire du substrat en céramique de nitrure (4) dans le sens de la hauteur,
dans lequel la température de départ de retrait des blocs de support (3) est comprise entre 1 300°C et 1 700°C ; et le taux de retrait linéaire des blocs de support (3) dans le sens de la hauteur est compris entre 16 % et 24 %, et
dans lequel la différence entre la température de début de retrait des blocs de support (3) et la température de début de retrait du substrat en céramique de nitrure (4) est comprise entre 30°C et 100°C ; et dans lequel la différence entre le taux de retrait linéaire des blocs de support (3) dans le sens de la hauteur et le taux de retrait linéaire du substrat en céramique de nitrure (4) dans le sens de la hauteur est comprise entre 0,2 % et 6 % ; et
soumettre le système obtenu au frittage pour obtenir un substrat en céramique de nitrure fritté ; le frittage étant effectué comme suit : chauffage du système obtenu à une température de 1700°C à 2000°C à une vitesse de chauffage de 0,1°C/min à 10°C/min, et maintien à la température pendant 1 h à 12 h,
dans lequel la température de départ de retrait est une température à laquelle le taux de retrait linéaire dans le sens de la hauteur est de 5 %,
la température de départ de retrait et le taux de retrait linéaire dans le sens de la hauteur des blocs de support (3) sont obtenus à partir des courbes de retrait de frittage des blocs de support (3) et du substrat en céramique de nitrure (4), et
les courbes de retrait de frittage des blocs de support (3) et du substrat en céramique de nitrure (4) sont mesurées à l'aide d'un instrument de mesure d'expansion thermique à haute température.

2. Procédé de frittage dynamique selon la revendication 1, dans lequel le substrat en céramique de nitrure (4) est choisi dans le groupe constitué d'un substrat de nitrure de silicium et d'un substrat de nitrure d'aluminium ; et un processus de moulage du substrat en céramique de nitrure (4) est choisi dans le groupe constitué de la coulée en bande, du pressage à sec, de la coulée en gel et du laminage de la pâte.

3. Procédé de frittage dynamique selon la revendication 1 ou 2, dans lequel le substrat en céramique de nitrure (4) a une épaisseur comprise entre 0,2 mm et 2,0 mm, une longueur inférieure ou égale à 300 mm et une largeur inférieure ou égale à 300 mm.

4. Procédé de frittage dynamique selon la revendication 3, dans lequel le substrat en céramique de nitrure (4) a une épaisseur de 0,5 mm à 1,5 mm, une longueur de 150 mm et une largeur de 150 mm.

5. Procédé de frittage dynamique selon la revendication 3, dans lequel le substrat en céramique de nitrure (4) est en nombre supérieur ou égal à 1 ; et
à condition que le substrat en céramique de nitrure (4) soit en nombre supérieur à 1, une pluralité de substrats en céramique de nitrure (4) sont stratifiés en un nombre de couches de stratification ne dépassant pas 30 ; les substrats en céramique de nitrure adjacents (4) sont séparés par une couche de poudre d'isolation au nitrure de bore ;
et les couches de poudre d'isolation au nitrure de bore dans différentes couches ont indépendamment une épaisseur de 20 µm à 300 µm.

6. Procédé de frittage dynamique selon la revendication 5, dans lequel, sous la condition que le substrat en céramique de nitrure (4) soit en nombre supérieur à 1, la pluralité des substrats en céramique de nitrure (4) sont laminés dans le nombre de couches de laminage de 5 à 20, et les couches de poudre d'isolation de nitrure de bore dans les différentes couches ont indépendamment une épaisseur de 50 µm à 200 µm.

7. Procédé de frittage dynamique selon la revendication 5 ou 6, dans lequel le poids de la plaque de pressage est calculé comme *W*=*P*×*S*/9.8-(*N*-1)×*W1*, où *P* représente une pression d'un substrat en céramique de nitrure inférieur (4), et *P* est compris entre 30 Pa et 500 Pa ; *S* représente une surface de poussée du substrat en céramique de nitrure (4), en m²; *N* représente un nombre de couches de stratification du substrat en céramique de nitrure (4), et *N* est compris entre 1 et 30 ; et *W1* représente un poids d'un seul substrat en céramique de nitrure (4), en kg.

8. Procédé de frittage dynamique selon la revendication 1 ou 7, dans lequel la distance d'espacement entre la plaque de pressage (2) et le substrat en céramique de nitrure (4) est comprise entre 0,02 mm et 0,03 mm.

9. Procédé de frittage dynamique selon la revendication 1 ou 7, dans lequel la différence entre la longueur de la plaque de pressage (2) et la longueur du substrat en céramique de nitrure (4) n'est pas inférieure à 10 mm ; et la différence entre la largeur de la plaque de pressage (2) et la largeur du substrat en céramique de nitrure (4) n'est pas inférieure à 10 mm.

10. Procédé de frittage dynamique selon la revendication 1, dans lequel un matériau des blocs de support (3) est le même qu'un matériau du substrat en céramique de nitrure (4) ; et un processus de moulage des blocs de support (3) est choisi dans le groupe constitué par le pressage à sec et le pressage isostatique à froid, une surface supérieure et une surface inférieure de chacun des blocs de support (3) sont parallèles, et chacun des blocs de support (3) a une surface de section transversale d'au moins 30 mm².

11. Procédé de frittage dynamique selon la revendication 1, dans lequel la température de départ de retrait des blocs de support (3) est comprise entre 1450°C et 1600°C.

12. Procédé de frittage dynamique selon la revendication 1 ou 11, dans lequel la différence entre la température de début de retrait des blocs de support (3) et la température de début de retrait du substrat en céramique de nitrure (4) est comprise entre 50°C et 80°C.

13. Procédé de frittage dynamique selon la revendication 1 ou 11, dans lequel le frittage est effectué à une vitesse de chauffage de 1°C/min à 5°C/min ; le frittage est effectué à une température de 1850°C à 1900°C ; et le maintien à la température est effectué pendant 3 h à 6 h.
